# EUROPÄISCHE PATENTSCHRIFT

(11) **EP 1 263 879 B1**
(45) Veröffentlichungstag und Bekanntmachung des Hinweises auf die Patenterteilung: **05.03.2008**
(21) Anmeldenummer: 01923566.2
(22) Anmeldetag: 12.02.2001
(51) Int. Cl.: C08L 55/02, C08L 51/04, C08L 25/12, C08F 279/02, C08F 279/04

(54) **ABS-FORMMASSEN MIT VERBESSERTER VERARBEITBARKEIT UND HOHEM GLANZ**
ABS MOULDING MATERIAL WITH IMPROVED WORKABILITY AND A HIGH LUSTRE
MATIERES A MOULER ABS AYANT UNE MOULABILITE AMELIOREE ET UNE BRILLANCE ELEVEE

(30) Priorität: 23.02.2000 DE 10008418
(43) Veröffentlichungstag der Anmeldung: 11.12.2002
(73) Patentinhaber: LANXESS Deutschland GmbH, 51369 Leverkusen (DE)
(72) Erfinder: EICHENAUER, Herbert, 41539 Dormagen (DE); WENZ, Eckhard, 50679 Köln (DE); ALBERTS, Heinrich, 51519 Odenthal (DE); JANSEN, Ulrich, 41541 Dormagen (DE); GASCHE, Hans-Erich, I-24121 Bergamo (IT)
(86) Internationale Anmeldenummer: PCT/EP2001/001494
(87) Internationale Veröffentlichungsnummer: WO 2001/062850

(56) Entgegenhaltungen:
- EP-A- 0 845 496
- WO-A-89/05836
- US-A- 4 713 420
- US-A- 4 874 815

## Beschreibung

ABS-Formmassen werden schon seit vielen Jahren in großen Mengen als thermoplastische Harze für die Herstellung von Formteilen aller Art eingesetzt. Dabei kann das Eigenschaftsniveau dieser Harze in weiten Bereichen variiert werden.

Für die Herstellung von großflächigen Teilen, insbesondere von Gehäuseteilen, werden ABS-Polymerisate benötigt, die sich durch ein sehr gutes Verarbeitungsverhalten, insbesondere durch sehr hohe thermoplastische Fließfähigkeit auszeichnen und zu Formteilen mit sehr hohem Oberflächenglanz führen. Dabei dürfen die sonstigen Eigenschaften (z.B. Zähigkeit, E-Modul) nicht negativ beeinflusst werden.

Unter Nutzung der Technologie der Emulsionspolymerisation wurde versucht, Produkte mit den geforderten Eigenschaften durch kombinierten Einsatz verschiedener Pfropfkautschukkomponenten in einer thermoplastische Harzmatrix herzustellen.

So beschreiben z.B. die DE-A 24 20 357 und DE-A 24 20 358 thermoplastische Formmassen von ABS-Typ mit hoher Zähigkeit, hohem Oberflächenglanz und leichterer Verarbeitbarkeit durch Kombination eines grobteiligen Pfropfkautschuks mit einem feinteiligen Pfropfkautschuk, wobei die Gewichtsverhältnisse Styrol : Acrylnitril in den Pfropfkautschuken und im Matrixharz spezielle Werte aufweisen müssen.

Nachteilig bei derartigen Formmassen vom ABS-Typ ist, dass zwei separat hergestellte Pfropfkautschukpolymerisate benötigt werden. Außerdem erfüllen die Fließfähigkeiten nicht die Anforderungen moderner Verarbeitungstechnik.

EP-A 470229, EP-A 473 400 und WO 91/13118 lehren die Herstellung stoßresistenter, hochglänzender thermoplastischer Harze durch Kombination eines Pfropfpolymeren mit geringem Kautschukgehalt und niedrigem Teilchendurchmesser mit einem Pfropfpolymeren mit hohem Kautschukgehalt und größerem Teilchendurchmesser.

Nachteilig bei diesen Produkten ist die nicht immer ausreichende thermoplastische Fließfähigkeit sowie die Notwendigkeit zweier separater Pfropfpolymensationsschritte.

In DE-A 41 13 326 werden thermoplastische Formmassen mit zwei unterschiedlichen Pfropfprodukten beschrieben, wobei die Kautschukgehalte der Pfropfkautschuke jeweils maximal 30 Gew.-% betragen. Dadurch ist die Verwendung relativ hoher Pfropfkautschukmengen notwendig, wodurch die thermoplastische Fließfähigkeit nur in engen Grenzen variiert werden kann. Außerdem sind die erreichbaren Glanzwerte ungenügend und auch hier sind zwei separate Pfropfpolymerisationsreaktionen notwendig.

Auch durch Verwendung von Mischungen zweier Kautschuklatices als Pfropfgrundlagen wurde versucht, Pfropfkautschuke zur Herstellung von verbesserten ABS-Produkten zu synthetisieren.

So beschreibt z.B. die EP-A 288 298 die Herstellung von Produkten mit einem feinteiligen und einem gröberteiligen Kautschuklatex als Pfropfgrundlagen, wobei jedoch nur Pfropfkautschuke mit niedrigen Kautschukgchalten um 40% beschrieben werden. Die daraus hergestellten thermoplastischen Harze weisen nur unzureichende Verarbeitbarkeit aufgrund schlechter thermoplastischer Fließfähigkeit auf; außerdem müssen Harzkomponenten mit hohen Acrylnitrilgchalten verwendet werden, was üblicherweise zur Verfärbung der ABS-Produkte führt.

In EP-A 745 624 wird die Verwendung zweier Kautschuklatices mit definierten Breiten der Teilchengrößenverteilungen zur Herstellung von ABS-Formmassen ohne Farbvertiefungen bei Formteilen mit Rippenstrukturen beschrieben. Diese Produkte führen jedoch zu einer schlechten Relation zwischen Zähigkeit und thermoplastischer Verarbeitbarkeit (Fließfahigkeit).

Die WO98/05836 offenbart kautschukmodifizierte Styrol-Acrylnitril-Polymere (ABS) mit drei verschiedenen Typen von Kautschukpartikeln. Die beiden feintelligeren Typen werden durch Emulsionspolymerisation hergestellt. Der grobteiligere Typ wird durch Massepolymerisation hergestellt.

EP 0 845 496 offenbart thermoplastische Hochglanz-Formmassen vom ABS-Typ, das zwei verschiedene Pfropfpolymerisate enthält. Das Dokument erwähnt zwar die Möglichkeit der Verwendung der Saatpolymerisationstechnik zur Herstellung der Butadienpolymerisatlatices, sie wird jedoch nicht konkret angewendet.

US 4,874,815 offenbart ähnlich wie WO98/05836 eine kautschukmodifizierte schlagzähe Polymer-Zusammensetzung, die ebenfalls drei verschiedene Pfropfpolymerisat-Komponenten, verschiedener Teilchengröße enthält. Die feintelligere Komponente wird durch Emulsionspolymerisation hergestellt, wohingegen die grobteiligeren Komponenten durch Massepolymerisation hergestellt werden,

Es bestand daher die Aufgabe, thermoplastische Formmassen vom ABS-Typ bereitzustellen, die die genannten Nachteile nicht aufweisen, eine sehr gute thermoplastische Verarbeitbarkeit besitzen und zu Formteilen mit sehr hohem Oberflächenglanz führen. Dabei sollten die ABS-Formmassen vorzugsweise ein in einem einzigen Verfahrensschritt hergestelltes Pfropfkautschukprodukt enthalten, wobei das Pfropfkautschukpolymerisat Kautschukgehalte über 50 Gew.-%, vorzugsweise über 55 Gew.-% aufweisen sollte.

Gegenstand der Erfindung sind Polymerzusammensetzungen enthaltend
I) ein Pfropfkautschukpolymerisat, welches erhältlich ist durch Emulsionspolymerisation von Styrol und Acrylnitril im Gewichtsverhältnis 95:5 bis 50:50, wobei Styrol und/oder Acrylnitril ganz oder teilweise ersetzt werden kann durch α-Methylstyrol, Methylmethacrylat oder N-Phenylmateinimid oder Mischungen hieraus, in Gegenwart einer Mischung aus einem Butadienpolymerisatlatex (A) mit einem mittleren Teilchendurchmesser d₅₀≤ 250 nm, vorzugsweise 100 bis 240 nm, besonders bevorzugt 130 bis 230 nm und ganz besonders bevorzugt 150 bis 220 nm und einer Breite der Teilchengrößenverteilung (gemessen als d₉₀-d₁₀ aus der integralen Teilchengrößenverteilung) von 20 bis 80 nm, vorzugsweise von 30 bis 60 nm, und einem Gelgehalt von 30 bis 95 Gew.-%, vorzugsweise 40 bis 90 Gew.-% und besonders bevorzugt 50 bis 85 Gew.-%, erhalten durch Saatpolymerisation bevorzugt unter Verwendung eines Saatlatex mit einem mittleren Teilchendurchmesser d₅₀ von 10 bis 100 nm, vorzugsweise 20 bis 90 nm und besonders bevorzugt 30 bis 80 nm, einem Butadienpolymerisatlatex (B) mit einem mittleren Teilchendurchmesser d₅₀ > 250 nm bis 350 nm, vorzugsweise 260 bis 340 nm und besonders bevorzugt 270 bis 320 nm, einer Breite der Teilchengrößenverteilung (gemessen als d₉₀-d₁₀ aus der integralen Teilchengrößenverteilung) von 30 bis 100 nm, vorzugsweise von 40 bis 80 nm, und einem Gelgehalt von 30 bis 80 Gew.-%, vorzugsweise 40 bis 75 Gew.-% und besonders bevorzugt 45 bis 70 Gew.-%, erhalten durch Saatpolymerisation bevorzugt unter Verwendung eines Saatlatex mit einem mittleren Teilchendurchmesser d₅₀ von 30 bis 150 nm, vorzugsweise 35 bis 140 nm und besonders bevorzugt von 40 bis 130 nm, ganz besonders bevorzugt unter Verwendung des gleichen Saatlatex wie bei der Herstellung des Polybutadienlatex (A), und einem Butadienpolymerisatlatex (C) mit einem mittleren Teilchendurchmesser d₅₀ >350 nm, vorzugsweise 360 bis 450 nm, besonders bevorzugt 370 bis 440 nm und ganz besonders bevorzugt von 375 bis 430 nm, einer Breite der Teilchengrößenverteilung (gemessen als d₉₀-d₁₀ aus der integralen Teilchengrößenverteilung) von 40 bis 150 nm, vorzugsweise 50 bis 100 nm, und einem Gelgehalt von 50 bis 95 Gew.-%, vorzugsweise 55 bis 90 Gew.-% und besonders bevorzugt 60 bis 85 Gew.-%, erhalten durch Saatpolymerisation bevorzugt unter Verwendung eines Saatlatex mit einem mittleren Teilchendurchmesser d₉₀ von 100 bis 250 nm, vorzugsweise 120 bis 240 nm und besonders bevorzugt von 150 bis 220 nm, ganz besonders bevorzugt unter Verwendung des Butadienpolymerisatlatex (A) als Saatlatex, wobei die Butadienpolymerisatlatices jeweils 0 bis 50 Gew.-% eines weiteren Vinylmonomeren copolymerisiert enthalten und das Pfropfkautschukpolymerisat Kautschukgehalte über 50 Gew.-% aufweist, und
II) mindestens ein kautschukfreies Copolymerisat aus Styrol und Acrylnitril im Gewichtsverhältnis 95 : 5 bis 50 : 50, wobei Styrol und/oder Acrylnitril ganz oder teilweise durch α-Methylstyrol, Methylmethacrylat, oder N-Phenyl-maleinimid oder Mischungen hieraus ersetzt werden kann, alle drei Butadienpolymerisatlatices (A), (B) und (C) durch Saatpolymerisation hergestellt werden.

Die Butadienpolymerisatlatices (A), (B) und (C) bei der Herstellung des Pfropfkautschukpolymerisats (I) können prinzipiell in beliebigen Mengen eingesetzt werden.

Vorzugsweise werden die Butadienpolymerisatlatices (A), (B) und (C) bei der Herstellung des Pfropfkautschukpolymerisats (I) in Anteilen von 5 bis 70 Gew.-%, vorzugsweise 10 bis 60 Gew.-% und besonders bevorzugt 15 bis 50 Gew.-% (A), 10 bis 70 Gew.-%, vorzugsweise 15 bis 60 Gew.-% und besonders bevorzugt 20 bis 55 Gew.-% (B) und 5 bis 60 Gew.-%, vorzugsweise 7,5 bis 50 Gew.-% und besonders bevorzugt 10 bis 45 Gew.-% (C) eingesetzt (jeweils bezogen auf den jeweiligen Feststoffanteil der Latices).

Im allgemeinen können die erfindungsgemäßen Formmassen 1 bis 60 Gew.-Teile, vorzugsweise 5 bis 50 Gew.-Teile (I) und 40 bis 99 Gew.-Teile, vorzugsweise 50 bis 95 Gew.-Teile (II) enthalten.

Gegenstand der vorliegenden Erfindung ist weiterhin ein Verfahren zur Herstellung einer Polymerzusammensetzung, wobei ein Pfropfkautschukpolymerisat, welches erhältlich ist durch Emulsionspolymerisation von Styrol und Acrylnitril im Gewichtsverhältnis 95 : 5 bis 50 : 50, wobei Styrol und/oder Acrylnitril ganz oder teilweise ersetzt werden kann durch α-Methylstyrol, Methylmethacrylat oder N-Phenyl-maleinimid oder Mischungen hieraus, in Gegenwart einer Mischung aus einem Butadienpolymerisatlatex (A) mit einem mittleren Teilchendurchmesser d₅₀ ≤ 250 nm und einer Breite der Teilchengrößenverteilung (gemessen als d₉₀-d₁₀ aus der integralen Teilchengrößenverteilung) von 20 bis 80 nm, und einem Gelgehalt von 30 bis 95 Gew.-%, einem Butadienpolymerisatlatex (B) mit einem mittleren Teilchendurchmesser d₅₀ >250 bis 350 nm, einer Breite der Teilchengrößenverteilung (gemessen als d₉₀-d₁₀ aus dcr integralen Teilchengrößenverteilung) von 30 bis 100 nm, und einem Gelgehalt von 30 bis 80 Gew.-%, und einem Butadienpolymerisatlatex (C) mit einem mittleren Teilchendurchmesser d₅₀ >350 nm, einer Breite der Teilchengrößenverteilung (gemessen als d₉₀-d₁₀ aus der integralen Teilchengrößenverteilung) von 40 bis 150 nm, und einem Gelgehalt von 50 bis 95 Gew.-%, unter Verwendung von durch Saatpolymerisation hergestellten Butadienpolymerisatlatices (A), (B) und (C) hergestellt wird, wobei die Butadienpolymerisatlatices jeweils 0 bis 50 Gew.-% eines weiteren Vinylmonomeren copolymerisiert enthalten und wobei das Pfropfkautschukpolymerisat in einem einzigen Schritt hergestellt wird und kautschukgehalte über 50 Gew.-% aufweist, und das Pfropfpolymerisat mit mindestens einem kautschukfreien Copolymerisat aus Styrol und Acrylnitril im Gewichtsverhältnis 95 : 5 bis 50 : 50, wobei Styrol und/oder Acrylnitril ganz oder teilweise durch α-Methylstyrol, Methylmethacrylat, oder N-Phenylmaleinimid oder Mischungen hieraus ersetzt werden kann, gemischt wird.

Außerdem können die erfindungsgemäßen Formmassen weitere kautschukfreie nicht aus Vinylmonomeren aufgebaute Thermoplastharze enthalten, wobei man diese Thermoplastharze in Mengen bis zu 1000 Gew.-Teilen, vorzugsweise bis zu 700 Gew.-Teilen und besonders bevorzugt bis zu 500 Gew.-Teilen (jeweils bezogen auf 100 Gew.-Teile I+II) verwendet.

Die Butadienpolymerisatlatices (A), (B) und (C) können durch Emulsionspolymerisation von Butadien in bekannter Weise hergestellt werden (siehe z.B. in Houbcn-Weyl, Methoden der Organischen Chemie, Makromolekulare Stoffe, Teil 1, S. 674 (1961), Thieme Verlag Stuttgart). Als Comonomere können bis zu 50 Gew.-% (bezogen auf die gesamte zur Butadienpolymerisatherstellung eingesetzte Monomerenmenge) eines oder mehrerer mit Butadien copolymerisierbarer Monomerer eingesetzt werden.

Beispiele für solche Monomere sind Isopren, Chloropren, Acrylnitril, Styrol, α-Methylstyrol, C₁-C₄-Alkylstyrole, C₁-C₈-Alkylacrylate, C₁-C₈-Alkylmethacrylate, Alkylenglykoldiacrylate, Alkylenglykoldimethacrylate, Divinylbenzol; vorzugsweise wird Butadien alleine oder in Abmischung mit bis zu 20 Gew.-%, vorzugsweise mit bis zu 10 Gew.-% Styrol und/oder Acrylnitril eingesetzt.

Es wird nach der sogenannten Saatpolymerisationstechnik gearbeitet, bei der zunächst ein feinteiliges Polymerisat, vorzugsweise ein Butadienpolymerisat, als Saatlatex hergestellt und dann durch Weiterumsatz mit Butadien enthaltenden Monomeren zu größeren Teilchen weiterpolymerisiert wird.

Als Saatlatexpolymere werden vorzugsweise Butadienpolymerisate wie z.B. Polybutadien, Butadien / Styrol - Copolymerisate, Butadien / Acrylnitril - Copolymerisate oder Polymerisate aus den oben genannten Monomeren eingesetzt.

Im Prinzip können auch andere feinteilige Latexpolymere wie z.B. Polystyrol oder Styrolcopolymerisate, Polymethylmethacrylat oder Methylmethacrylatcopolymere sowie Polymerisate anderer Vinylmonomerer verwendet werden.

Bevorzugte Saatlatexpolymere sind Polybutadienlatices.

Dabei wird bei der Herstellung des Butadienpolymerisatlatex (A) ein Saatlatex mit einem mittleren Teilchendurchmesser d₅₀ von 10 bis 100 nm, vorzugsweise 20 bis 90 nm und besonders bevorzugt 30 bis 80 nm eingesetzt.

Bei der Herstellung des Butadienpolymerisatlatex (B) wird ein Saatlatex mit einem mittleren Teilchendurchmesser d₅₀ von 30 bis 150 nm, vorzugsweise 35 bis 140 nm und besonders bevorzugt 40 bis 130 nm eingesetzt, ganz besonders bevorzugt ist die Verwendung des gleichen Saatlatex wie bei der Herstellung des Butadienpolymerisatlatex (A).

Bei der Herstellung des Butadienpolymerisatlatex (C) wird ein Saatlatex mit einem mittleren Teilchendurchmesser d₅₀ von 100 bis 250 nm, vorzugsweise 120 bis 240 nm und besonders bevorzugt von 150 bis 220 nm eingesetzt, ganz besonders bevorzugt ist die Verwendung des Butadienpolymerisatlatex (A) als Saatlatex.

Die Saatlatexpolymere besitzen einen Gelgehalt von 10 bis 95 Gew.-%, vorzugsweise von 20 bis 90 Gew.-% und besonders bevorzugt von 30 bis 85 Gew.-%.

Der Butadienpolymerisatlatex (A) besitzt einen mittleren Teilchendurchmesser d₅₀ <250 nm, vorzugsweise 100 bis 240 nm, besonders bevorzugt 130 bis 230 nm und ganz besonders bevorzugt 150 bis 220 nm, eine Breite der Teilchengrößenverteilung (gemessen als d₅₀ - d₁₀ aus der integralen Teilchengrößenverteilung) von 20 bis 80 nm, vorzugsweise 30 bis 60 nm und einen Gelgehalt von 30 bis 95 Gew.-%, vorzugsweise 40 bis 90 Gew.-% und besonders bevorzugt 50 bis 85 Gew.-%.

Der Butadienpolymerisatlatex (B) besitzt einen mittleren Teilchendurchmesser d₅₀ von > 250 nm bis 350 nm, vorzugsweise von 260 bis 340 nm und besonders bevorzugt von 270 bis 320 nm, eine Breite der Teilchengrößenverteilung (gemessen als d₅₀ - d₁₀ aus der integralen Teilchengrößenverteilung) von 30 bis 100 nm, vorzugsweise 40 bis 80 nm und einen Gelgehalt von 30 bis 80 Gew.-%, vorzugsweise 40 bis 75 Gew.-% und besonders bevorzugt 45 bis 70 Gew.-%.

Der Butadienpolymerisatlatex (C) besitzt einen mittleren Teilchendurchmesser d₅₀ von > 350 nm, vorzugsweise von 360 bis 450 nm, besonders bevorzugt von 370 bis 440 nm und ganz besonders bevorzugt 375 bis 430 nm, eine Breite der Teilchengrößenverteilung (gemessen als d₅₀ - d₁₀ aus der integralen Teilchengrößenverteilung) von 40 bis 150 nm, vorzugsweise 50 bis 100 nm und einen Gelgehalt von 50 bis 95 Gew.-%, vorzugsweise 55 bis 90 Gew.-% und besonders bevorzugt 60 bis 85 Gew.-%.

Die Bestimmung des mittleren Teilchendurchmessers d₅₀ sowie der d₁₀ - und d₉₀ - Werte kann durch Ultrazentrifugenmessung ermittelt werden (vgl. W. Scholtan, H.Lange: Kolloid Z. u. Z. Polymere 250, S. 782 bis 796 (1972)), die angegebenen Werte für den Gelgehalt beziehen sich auf die Bestimmung nach der Drahtkäfigmethode in Toluol (vgl. Houben-Weyl, Methoden der Organischen Chemie, Makromolekulare Stoffe, Teil 1, S. 307 (1961), Thieme Verlag Stuttgart).

Die Gelgehalte der Butadienpolymerisatlatices (A), (B) und (C) sowie der Saatpolymerlatices können in prinzipiell bekannter Weise durch Anwendung geeigneter Reaktionsbedingungen eingestellt werden (z.B. hohe Reaktionstemperatur und/oder Polymerisation bis zu hohem Umsatz sowie gegebenenfalls Zusatz vernetzend wirkender Substanzen zur Erzielung eines hohen Gelgehaltes oder z.B. niedrige Reaktionstemperatur und/oder Abbruch der Polymerisationsreaktion vor Eintreten einer zu starken Vernetzung sowie gegebenenfalls Zusatz von Molekulargewichtsreglern wie beispielsweise n-Dodecylmercaptan oder t-Dodecylmercaptan zur Erzielung eines niedrigen Gelgehaltes). Als Emulgator können übliche anionische Emulgatoren wie Alkylsulfate, Alkylsulfonate, Aralkylsulfonate, Seifen gesättigter oder ungesättigter Fettsäuren sowie alkalischer disproportionierter oder hydrierter Abietin- oder Tallölsäuren verwendet werden, vorzugsweise werden Emulgatoren mit Carboxylgruppen (z.B. Salze von C₁₀-C₁₈-Fettsäuren, disproportionierte Abietinsäure, Emulgatoren gemäß DE-OS 36 39 904 und DE-OS 39 13 509) eingesetzt.

Zur Erzielung des erfindungsgemäßen Effektes müssen alle drei Butadienpolymerisatlatcx-Komponenten (A), (B) und (C) durch Saatpolymerisation hergestellt worden sein.

Die Pfropfpolymerisation bei der Herstellung des Pfropfpolymerisats I) kann nach beliebigen Verfahren durchgeführt werden, vorzugsweise wird sie so durchgeführt, dass das Monomerengemisch kontinuierlich zu dem Gemisch der Butadienpolymerisatlatices (A.), (B) und (C) gegeben und polymerisiert wird.

Dabei werden bevorzugt spezielle Monomer/Kautschuk-Verhältnisse eingehalten und die Monomeren in einer bekannten Weise zum Kautschuklatex geben.

Zur Erzeugung der erfindungsgemäßen Komponente I) werden vorzugsweise 15 bis 50 Gew.-Teile, besonders bevorzugt 20 bis 40 Gew.-Teile, eines Gemisches aus Styrol und Acrylnitril, das gegebenenfalls bis zu 50 Gew.-% (bezogen auf Gesamtmenge der in der Pfropfpolymerisation eingesetzten Monomeren) eines oder mehrerer Comonomerer enthalten kann, in Gegenwart von vorzugsweise 50 bis 85 Gew.-Teilen, besonders bevorzugt 60 bis 80 Gew.-Teilen (jeweils bezogen auf Feststoff) des Butadienpolymerisatlatex-Gemisches aus (A), (B) und (C) polymerisiert.

Die bei der Pfropfpolymerisation eingesetzten Monomeren sind vorzugsweise Mischungen aus Styrol und Acrylnitril im Gew.-Verhältnis 95:5 bis 50:50, besonders bevorzugt im Gew.-Verhältnis 80:20 bis 65:35, wobei Styrol und/oder Acrylnitril ganz oder teilweise durch copolymerisierbare Monomere, vorzugsweise durch α-Methylstyrol, Methylmethacrylat oder N-Phenylmaleinimid ersetzt werden können. Prinzipiell können zusätzlich beliebige weitere copolymerisierbare Vinylmonomere in Mengen bis ca. 10 Gew.-% (bezogen auf Gesamtmenge der Monomeren) mitverwendet werden.

Zusätzlich können bei der Pfropfpolymerisation Molekulargewichtsregler eingesetzt werden, vorzugsweise in Mengen von 0,01 bis 2 Gew.-%, besonders bevorzugt in Mengen von 0,05 bis 1 Gew.-% (jeweils bezogen auf Gesamtmonomermenge in der Pfropfpolymerisationstufe).

Geeignete Molekulargewichtsregler sind beispielsweise Alkylmercaptane wie n-Dodecylmercaptan, t-Dodecylmercaptan; dimeres α-Methylstyrol; Terpinolen.

Als Initiatoren kommen anorganische und organische Peroxide, z.B. H₂O₂, Di-tert.-Butylperoxid, Cumolhydroperoxid, Dicyclohexylpercarbonat, tert.-Butylhydroperoxid, p-Menthanhydroperoxid, Azoinitiatoren wie Azobisisobutyronitril, anorganische Persalze wie Ammonium-, Natrium- oder Kaliumpersulfat, Kaliumperphosphat, Natriumperborat sowie Redox-Systeme in Betracht. Redox-Systeme bestehen in der Regel aus einem organischen Oxidationsmittel und einem Reduktionsmittel, wobei im Reaktionsmedium zusätzlich Schwermetallionen vorhanden sein können (siehe Houben-Weyl, Methoden der Organischen Chemie, Band 14/1, S. 263 bis 297).

Die Polymerisationstemperatur ist im allgemeinen 25°C bis 160°C, vorzugsweise 40°C bis 90°C. Geeignete Emulgatoren sind oben angegeben.

Dabei kann nach üblicher Temperaturführung, z.B. isotherm, gearbeitet werden; vorzugsweise wird die Pfropfpolymerisation jedoch so durchgeführt, dass der Temperaturunterschied zwischen Beginn und Ende der Reaktion mindestens 10°C, vorzugsweise mindestens 15°C und besonders bevorzugt mindestens 20°C beträgt.

Zur Erzeugung der erfindungsgemäßen Komponente I) kann die Pfropfpolymerisation vorzugsweise durch Monomerenzulauf derart durchgeführt werden, dass innerhalb der ersten Hälfte der Gesamtmonomerenzudosierzeit 55 bis 90 Gew.-%, vorzugsweise 60 bis 80 Gew.-% und besonders bevorzugt 65 bis 75 Gew.-% der gesamten bei der Pfropfpolymerisation einzusetzenden Monomeren zudosiert werden; der verbleibende Monomeranteil wird innerhalb der zweiten Hälfte der Gesamtmonomerzudosierzeit zudosiert.

Als kautschukfreie Copolymerisate II) werden vorzugsweise Copolymerisate des Styrols und Acrylnitrils im Gewichtsverhältnis 95:5 bis 50:50 verwendet, wobei Styrol und/oder Acrylnitril ganz oder teilweise durch α-Methylstyrol, Methylmethacrylat oder N-Phenylmaleinimid ersetzt werden kann.

Besonders bevorzugt sind Copolymerisate II) mit Anteilen an eingebauten Acrylnitril-Einheiten <30 Gew.-%.

Diese Copolymerisate besitzen vorzugsweise mittlere Molekulargewichte M_{w} von 20 000 bis 200 000 bzw. Grenzviskositäten [η] von 20 bis 110 ml/g (gemessen in Dimethylformamid bei 25°C).

Einzelheiten zur Herstellung dieser Harze sind beispielsweise in der DE-A 2 420 358 und der DE-A 2 724 360 beschrieben. Durch Masse- bzw. Lösungspolymerisation hergestellte Vinylharze haben sich besonders bewährt. Die Copolymerisate können allein oder in beliebiger Mischung zugesetzt werden.

Außer aus Vinylmonomeren aufgebauten Thermoplastharzen ist auch die Verwendung von Polykondensaten z.B. aromatischen Polycarbonaten, aromatischen Polyestercarbonaten. Polyestern, Polyamiden als kautschukfreies Copolymerisat in den erfindungsgemäßen Formmassen möglich.

Geeignete thermoplastische Polycarbonate und Polyestercarbonate sind bekannt (vgl. z.B. DE-A 1 495 626, DE-A 2 232 877, DE-A 2 703 376, DE-A 2 714 544, DE-A 3 000 610, DE-A 3 832 396, DE-OS 3 077 934), z.B. herstellbar durch Umsetzung von Diphenolen der Formeln (III) und (IV) 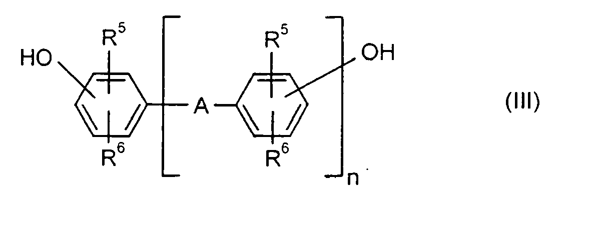 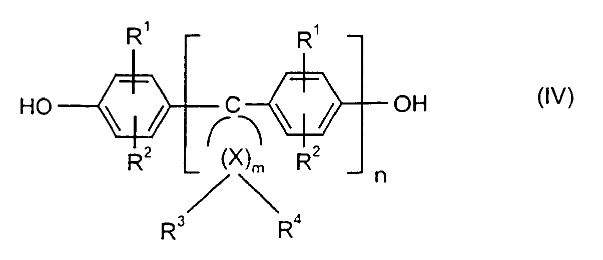 worin
- A: eine Einfachbindung, C₁-C₅-Alkylen, C₂-C₅-Alkyliden, C₅-C₆-Cycloalkyliden, -O-, -S-, -SO-, -SO₂- oder -CO- ist,
- R⁵ und R⁶: unabhängig voneinander für Wasserstoff, Methyl oder Halogen, insbesondere für Wasserstoff, Methyl, Chlor oder Brom stehen,
- R¹ und R²: unabhängig voneinander Wasserstoff, Halogen bevorzugt Chlor oder Brom, C₁-C₈-Alkyl, bevorzugt Methyl, Ethyl, C₅-C₆-Cycloalkyl, bevorzugt Cyclohexyl, C₆-C₁₀-Aryl, bevorzugt Phenyl, oder C₇-C₁₂-Aralkyl, bevorzugt Phenyl-C₁-C₄-alkyl, insbesondere Benzyl, bedeuten,
- m: eine ganze Zahl von 4 bis 7, bevorzugt 4 oder 5 ist,
- n: 0 oder 1 ist,
- R³ und R⁴: für jedes X individuell wählbar sind und unabhängig voneinander Wasserstoff oder C₁-C₆-Alkyl bedeuten und
- X: Kohlenstoffbedeutet,

mit Kohlensäurehalogeniden, vorzugsweise Phosgen, und/oder mit aromatischen Dicarbonsäuredihalogeniden, vorzugsweise Benzoldicarbonsäuredihalogeniden, durch Phasengrenzflächen-Polykondensation oder mit Phosgen durch Polykondensation in homogener Phase (dem sogenannten Pyridinverfahren), wobei das Molekulargewicht in bekannter Weise durch eine entsprechende Menge an bekannten Kettenabbrechern eingestellt werden kann.

Geeignete Diphenole der Formeln (III) und (IV) sind z.B. Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 2,2-Bis-(4-hydroxy-3,5-dimethylphenyl)-propan, 2,2-Bis-(4-hydroxy-3,5-dichlorphenyl)-propan, 2,2-Bis-(4-hydroxy-3,5-dibromphenyl)-propan, 1,1-Bis-(4-hydroxyphenyl)-cyclohexan, 1,1-Bis-(4-hydroxyphenyl)-3,3,5-trimethylcyclohexan, 1,1-Bis-(4-hydroxyphenyl)-3,3-dimethylcyclohexan, 1,1-Bis-(4-hydroxyphenyl)-3,3,5,5-tetramethylcyclohexan oder 1,1-Bis-(4-hydroxyphenyl)-2,4,4,-trimethylcyclopentan.

Bevorzugte Diphenole der Formel (III) sind 2,2-Bis-(4-hydroxyphenyl)-propan und 1,1-Bis-(4-hydroxyphenyl)-cyclohexan, bevorzugtes Phenol der Formel (IV) ist 1,1-Bis-(4-hydroxyphenyl)-3,3,5-trimethylcyclohexan.

Es können auch Mischungen von Diphenolen eingesetzt werden.

Geeignete Kettenabbrecher sind z.B. Phenol, p-tert.-Butylphenol, langkettige Alkylphenole wie 4-(1,3-Tetramethyl-butyl)phenol gemäß DE-A 2 842 005, Monoalkylphenole, Dialkylphenole mit insgesamt 8 bis 20 C-Atomen in den Alkylsubstituenten gemäß DE-A 3 506 472, wie p-Nonylphenol, 2,5-di-tert.-Butylphenol, p-tert.-Octylphenol, p-Dodecylphenol, 2-(3,5-Dimethylheptyl)-phenol und 4-(3,5-Dimethylheptyl)-phenol. Die erforderliche Menge an Kettenabbrechern ist im allgemeinen 0,5 bis 10 Mol-%, bezogen auf die Summe der Diphenole (III) und (IV).

Die geeigneten Polycarbonate bzw. Polyestercarbonate können linear oder verzweigt sein; verzweigte Produkte werden vorzugsweise durch den Einbau von 0,05 bis 2,0 Mol-%, bezogen auf die Summe der eingesetzten Diphenole, an drei - oder mehr als dreifunktionellen Verbindungen, z.B. solchen mit drei oder mehr als drei phenolischen OH-Gruppen, erhalten.

Die geeigneten Polycarbonate bzw. Polyestercarbonate können aromatisch gebundenes Halogen, vorzugsweise Brom und/oder Chlor, enthalten; vorzugsweise sind sie halogenfrei.

Sie haben mittlere Molekulargewichte (M̅_{w}, Gewichtsmittel) bestimmt z.B. durch Ultrazentrifugation oder Streulichtmessung von 10000 bis 200000, vorzugsweise von 20 000 bis 80 000.

Geeignete thermoplastische Polyester sind vorzugsweise Polyalkylenterephthalate, d.h., Reaktionsprodukte aus aromatischen Dicarbonsäuren oder ihren reaktionsfähigen Derivaten (z.B. Dimethylestern oder Anhydriden) und aliphatischen, cycloaliphatischen oder arylaliphatischen Diolen und Mischungen solcher Reaktionsprodukte.

Bevorzugte Polyalkylenterephthalate lassen sich aus Terephthalsäuren (oder ihren reaktionsfähigen Derivaten) und aliphatischen oder cycloaliphatischen Diolen mit 2 bis 10 C-Atomen nach bekannten Methoden herstellen (Kunststoff-Handbuch, Band VIII, S. 695 ff, Carl Hanser Verlag, München 1973).

In bevorzugten Polyalkylenterephthalaten sind 80 bis 100, vorzugsweise 90 bis 100 Mol-% der Dicarbonsäurereste, Terephthalsäurereste und 80 bis 100, vorzugsweise 90 bis 100 Mol-% der Diolreste, Ethylenglykol- und/oder Butandiol-1,4-Reste.

Die bevorzugten Polyalkylenterephthalate können neben Ethylenglykol- bzw. Butandiol-1,4-Resten 0 bis 20 Mol-% Reste anderer aliphatischer Diole mit 3 bis 12 C-Atomen oder cycloaliphatischer Diole mit 6 bis 12 C-Atomen enthalten, z.B. Reste von Propandiol-1,3, 2-Ethylpropandiol-1,3, Neopentylglykol, Pentandiol-1,5, Hexandiol-1,6, Cyclohexandi-methanol-1,4, 3-Methylpentandiol-1,3 und -1,6, 2-Ethylhexandiol-1,3, 2,2-Diethylpropandiol-1,3, Hexandiol-2,5, 1,4-Di(β-hydroxyethoxy)-benzol, 2,2,-Bis-4-hydroxycyclohexyl)-propan, 2,4-Dihydroxy-1,1,3,3-tetramethylcyclobutan, 2,2-Bis-(3-β-hydroxyethoxyphenyl)-propan und 2,2-Bis-(4-hydroxypropoxyphenyl)-propan (DE-OS 2 407 647, 2 407 776, 2 715 932).

Die Polyalkylenterephthalate können durch Einbau relativ kleiner Mengen 3- oder 4-wertiger Alkohole oder 3- oder 4-basiger Carbonsäuren, wie sie in der DE-OS 1 900 270 und der US-PS 3 692 744 beschrieben sind, verzweigt werden. Beispiele bevorzugter Verzweigungsmittel sind Trimesinsäure, Trimellithsäure, Trimethylolethan und -propan und Pentaerythrit. Es ist ratsam, nicht mehr als 1 Mol-% des Verzweigungsmittels, bezogen auf die Säurekomponente, zu verwenden.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind und Mischungen dieser Polyalkylenterephthalate.

Bevorzugte Polyalkylenterephthalate sind auch Copolyester, die aus mindestens zwei der oben genannten Alkoholkomponenten hergestellt sind: besonders bevorzugte Copolyester sind Poly-(ethylenglykolbutandiol-1,4)-terephthalate.

Die vorzugsweise geeigneten Polyalkylenterephthalate besitzen im allgemeinen eine Intrinsic-Viskosität von 0,4 bis 1,5 dl/g, vorzugsweise 0,5 bis 1,3 dl/g, insbesondere 0,6 bis 1,2 dl/g, jeweils gemessen in Phenol/o-Dichlorbenzol (1:1 Gew.-Teile) bei 25°C.

Geeignete Polyamide sind bekannte Homopolyamide, Copolyamide und Mischungen dieser Polyamide. Es können dies teilkristalline und/oder amorphe Polyamide sein.

Als teilkristalline Polyamide sind Polyamid-6, Polyamid-6,6, Mischungen und entsprechende Copolymerisate aus diesen Komponenten geeignet. Weiterhin kommen teilkristalline Polyamide in Betracht, deren Säurekomponente ganz oder teilweise aus Terephthalsäure und/oder Isophthalsäure und/oder Korksäure und/oder Sebacinsäure und/oder Azelainsäure und/oder Adipinsäure und/oder Cyclohexandicarbonsäure, deren Diaminkomponente ganz oder teilweise aus m- und/oder p-Xylylen-diamin und/oder Hexamethylendiamin und/oder 2,2,4-Trimethylhexamethylendiamin und/oder 2,2,4-Trimethylhexamethylendiamin und/oder Isophorondiamin besteht und deren Zusammensetzung prinzipiell bekannt ist.

Außerdem sind Polyamide zu nennen, die ganz oder teilweise aus Lactamen mit 7-12 C-Atomen im Ring, gegebenenfalls unter Mitverwendung einer oder mehrerer der oben genannten Ausgangskomponenten, hergestellt werden.

Besonders bevorzugte teilkristalline Polyamide sind Polyamid-6 und Polyamid-6,6 und ihre Mischungen. Als amorphe Polyamide können bekannte Produkte eingesetzt werden. Sie werden erhalten durch Polykondensation von Diaminen wie Ethylendiamin, Hexamethylendiamin, Decamethylendiamin, 2,2,4- und/oder 2,4,4-Trimethylhexamethylendiamin, m- und/oder p-Xylylen-diamin, Bis-(4-aminocyclohexyl)-methan, Bis-(4-aminocyclohexyl)-propan, 3.3'-Dimethyl-4,4'-diamino-dicyclohexylmethan, 3-Aminomethyl,3,5,5-trimethylcyclohexylamin, 2,5- und/oder 2,6-Bis-(aminomethyl)-norbornan und/oder 1,4-Diaminomethylcyclohexan mit Dicarbonsäuren wie Oxalsäure, Adipinsäure, Azelainsäure, Azelainsäure, Decandicarbonsäure, Heptadecandicarbonsäure, 2,2,4- und/oder 2,4,4-Trimethyladipinsäure, Isophthalsäure und Terephthalsäure.

Auch Copolymere, die durch Polykondensation mehrerer Monomerer erhalten werden, sind geeignet, ferner Copolymere, die unter Zusatz von Aminocarbonsäuren wie ε-Aminocapronsäure, ω-Aminoundecansäure oder ω-Aminolaurinsäure oder ihren Lactamen, hergestellt werden.

Besonders geeignete amorphe Polyamide sind die Polyamide hergestellt aus Isophthalsäure, Hexamethylendiamin und weiteren Diaminen wie 4.4'-Diaminodicyclohexylmethan, Isophorondiamin, 2,2,4- und/oder 2,4,4-Trimethylhexamethylendiamin, 2,5- und/oder 2,6-Bis-(aminomethyl)-norbornen; oder aus Isophthalsäure, 4,4'-Diamino-dicyclohexylmethan und ε-Caprolactam; oder aus Isophthalsäure, 3,3'-Dimethyl-4,4'-diamino-dicyclohexylmethan und Laurinlactam; oder aus Terephthalsäure und dem Isomerengemisch aus 2,2,4- und/oder 2,4,4-Trimethylhexamethylendiamin.

Anstelle des reinen 4,4'-Diaminodicyclohexylmethans können auch Gemische der stellungsisomeren Diaminodicyclohexylmethane eingesetzt werden, die sich zusammensetzen aus
70 bis 99 Mol-% des 4,4'-Diamino-Isomeren
1 bis 30 Mol-% des 2,4'-Diamino-Isomeren
0 bis 2 Mol-% des 2,2'-Diamino-Isomeren und
gegebenenfalls entsprechend höher kondensierten Diaminen, die durch Hydrierung von Diaminodiphenylmethan technischer Qualität erhalten werden. Die Isophthalsäure kann bis zu 30 % durch Terephthalsäure ersetzt sein.

Die Polyamide weisen vorzugsweise eine relative Viskosität (gemessen an einer 1 gew.-%igen Lösung in m-Kresol bei 25°C) von 2,0 bis 5,0. besonders bevorzugt von 2,5 bis 4,0 auf.

Bevorzugte erfindungsgemäße Formmassen enthalten 1 bis 60 Gew.-Teile, vorzugsweise 5 bis 50 Gew.-Teile Pfropfpolymerkomponente I) und 40 bis 99 Gew.-Teile, vorzugsweise 50 bis 95 Gew.-Teile kautschukfreies Copolymerisat II).

Die Herstellung der erfindungsgemäßen Formmassen erfolgt durch Vermischen der Komponenten I) und II) auf üblichen Mischaggregaten (vorzugsweise auf Mehrwalzenstühlen, Mischextrudern oder Innenknetern).

Gegenstand der Erfindung ist daher weiterhin ein Verfahren zur Herstellung der erfindungsgemäßen Formmassen, wobei man die Komponenten I) und II) vermischt und bei erhöhter Temperatur, im allgemeinen bei Temperaturen von 150°C bis 300°C, compoundiert und extrudiert.

Den erfindungsgemäßen Formmassen können bei Herstellung, Aufarbeitung, Weiterverarbeitung und Endverformung die erforderlichen bzw. zweckmäßigen Additive zugesetzt werden, z.B. Antioxidantien, UV-Stabilisatoren, Peroxidzerstörer, Antistatika, Gleitmittel, Entformungsmittel, Flammschutzmittel, Füll- oder Verstärkerstoffe (Glasfasern, Kohlefasern, etc.), Farbmittel.

Die Endverformung kann auf handelsüblichen Verarbeitungsaggregaten vorgenommen werden und umfasst z.B. Spritzgießverarbeitung, Plattenextrusion mit gegebenenfalls anschließender Warmverformung, Kaltverformung, Extrusion von Rohren und Profilen, Kalander-Verarbeitung.

In den folgenden Beispielen sind die angegebenen Teile immer Gewichtsteile und die angegebenen % immer Gew.-%, wenn nicht anders angegeben.

### Beispiele:

### Komponenten

### ABS-Pfropfpolymerisat 1 (erfindungsgemäß)

15 Gew.-Teile (gerechnet als Feststoff) eines unter Verwendung eines Polybutadiensaatlatex mit einem d₅₀-Wert von 46 nm durch radikalische Saatpolymerisation hergestellten anionisch emulgierten Polybutadienlatex mit einem mittleren Teilchendurchmesser d₅₀ von 191 nm, einer Breite der Teilchengrößenverteilung d₉₀-d₁₀ von 42 nm und einem Gelgehalt von 69 Gew.-%, 30 Gew.-Teile (gerechnet als Feststoff) eines unter Verwendung eines Polybutadienlatex mit einem d₅₀-Wert von 125 nm als Saatlatex durch radikalische Saatpolymerisation hergestellten anionisch emulgierten Polybutadienlatex mit einem mittleren Teilchendurchmesser d₅₀ von 297 nm, einer Breite der Teilchengrößenverteilung d₉₀-d₁₀ von 77 nm und einem Gelgehalt von 61 Gew.-% und 15 Gew.-Teile (gerechnet als Feststoff) eines unter Verwendung eines Polybutadienlatex mit einem d₅₀-Wert von 125 nm als Saatlatex durch radikalische Saatpolymerisation hergestellten anionisch emulgierten Polybutadienlatex mit einem mittleren Teilchendurchmesser d₅₀ von 422 nm, einer Breite der Teilchengrößenverteilung d₉₀-d₁₀ von 63 nm und einem Gelgehalt von 80 Gew.-% werden mit Wasser auf einem Feststoffgehalt von ca. 20 Gew.-% gebracht, wonach auf 59°C erwärmt und mit 0,5 Gew.-Teilen Kaliumperoxodisulfat (gelöst in Wasser) versetzt wird.

Danach werden 40 Gew.-Teile eines Gemisches aus 73 Gew.-% Styrol, 27 Gew.-% Acrylnitril und 0,12 Gew.-Teile tert.-Dodecylmercaptan innerhalb 6 Stunden gleichmäßig zudosiert, parallel dazu wird 1 Gew.-Teil (gerechnet als Festsubstanz) des Natriumsalzes eines Harzsäuregemisches (Dresinate 731, Abieta Chemie GmbH, Gersthofen, Deutschland, gelöst in alkalisch eingestelltem Wasser) über einen Zeitraum von 6 Stunden zudosiert. Im Laufe der 6 Stunden wird die Reaktionstemperatur von 59°C auf 77°C angehoben. Nach einer zweistündigen Nachreaktionszeit bei 80°C wird der Pfropflatex nach Zugabe von ca. 1,0 Gew.-Teilen eines phenolischen Antioxidans mit einem Magnesiumsulfat / Essigsäure - Gemisch koaguliert und nach dem Waschen mit Wasser das resultierende feuchte Pulver bei 70°C getrocknet.

### ABS-Pfropfpolymerisat 2 (erfindungsgemäß)

15 Gew.-Teile (gerechnet als Feststoff) eines unter Verwendung eines Polybutadienlatex mit einem d₅₀-Wert von 46 nm als Saatlatex durch radikalische Saatpolymerisation hergestellten anionisch emulgierten Polybutadienlatex mit einem mittleren Teilchendurchmesser d₅₀ von 189 nm, einer Breite der Teilchengrößenverteilung d₉₀-d₁₀ von 50 nm und einem Gelgehalt von 76 Gew.-%, 30 Gew.-Teile (gerechnet als Feststoff) eines unter Verwendung eines Polybutadienlatex mit einem d₅₀-Wert von 119 nm als Saatlatex durch radikalische Saatpolymerisation hergestellten anionisch emulgierten Polybutadienlatex mit einem mittleren Teilchendurchmesser d₅₀ von 285 nm, einer Breite der Teilchengrößenverteilung d₉₀-d₁₀ von 60 nm und einem Gelgehalt von 67 Gew.-% und 15 Gew.-Teile (gerechnet als Feststoff) eines unter Verwendung eines Polybutadienlatex mit einem d₅₀-Wert von 189 nm als Saatlatex durch radikalische Saatpolymerisation hergestellten anionisch emulgierten Polybutadienlatex mit einem mittleren Teilchendurchmesser d₅₀ von 399 nm, einer Breite der Teilchengrößenverteilung d₉₀-d₁₀ von 56 nm und einem Gelgehalt von 85 Gew.-% werden mit Wasser auf einem Feststoffgehalt von ca. 20 Gew.-% gebracht, wonach auf 55°C erwärmt und mit 0,5 Gew.-Teilen Kaliumperoxodisulfat (gelöst in Wasser) versetzt wird.

Danach werden 40 Gew.-Teile eines Gemisches aus 73 Gew.-% Styrol. 27 Gew.-% Acrylnitril und 0,12 Gew.-Teile tert.-Dodecylmercaptan innerhalb 5 Stunden gleichmäßig zudosiert, parallel dazu wird 1 Gew.-Teil (gerechnet als Festsubstanz) des Natriumsalzes eines Harzsäuregemisches (Dresinate 731, Abieta Chemie GmbH, Gersthofen, Deutschland, gelöst in alkalisch eingestelltem Wasser) über einen Zeitraum von 5 Stunden zudosiert. Im Laufe der 5 Stunden wird die Reaktionstemperatur von 55°C auf 80°C angehoben. Nach einer zweistündigen Nachreaktionszeit bei 80°C wird der Pfropflatex nach Zugabe von ca. 1,0 Gew.-Teilen eines phenolischen Antioxidans mit einem Magnesiumsulfat / Essigsäure - Gemisch koaguliert und nach dem Waschen mit Wasser das resultierende feuchte Pulver bei 70°C getrocknet.

### ABS-Pfropfpolymerisat 3 (erfindungsgemäß)

15 Gew.-Teile (gerechnet als Feststoff) eines unter Verwendung eines Polybutadiensaatlatex mit einem d₅₀-Wert von 48 nm durch radikalische Saatpolymerisation hergestellten anionisch emulgierten Polybutadienlatex mit einem mittleren Teilchendurchmesser d₅₀ von 185 nm, einer Breite der Teilchengrößenverteilung d₉₀-d₁₀ von 51 nm und einem Gelgehalt von 69 Gew.-%, 30 Gew.-Teile (gerechnet als Feststoff) eines unter Verwendung eines Polybutadienlatex mit einem d₅₀-Wert von 125 nm als Saatlatex durch radikalische Saatpolymerisation hergestellten anionisch emulgierten Polybutadienlatex mit einem mittleren Teilchendurchmesser d₅₀ von 297 nm, einer Breite der Teilchengrößenverteilung d₉₀-d₁₀ von 77 nm und einem Gelgehalt von 61 Gew.-% und 15 Gew.-Teile (gerechnet als Feststoff) eines unter Verwendung eines Polybutadiensaatlatex mit einem d₅₀-Wert von 185 nm als Saatlatex durch radikalische Saatpolymerisation hergestellten anionisch emulgierten Polybutadienlatex mit einem mittleren Teilchendurchmesser d₅₀ von 422 nm, einer Breite der Teilchengrößenverteilung d₉₀-d₁₀ von 63 nm und einem Gelgehalt von 80 Gew.-% werden mit Wasser auf einem Feststoffgehalt von ca. 20 Gew.-% gebracht, wonach auf 55°C erwärmt und mit 0,5 Gew.-Teilen Kaliumperoxodisulfat (gelöst in Wasser) versetzt wird.

Danach werden 40 Gew.-Teile eines Gemisches aus 73 Gew.-% Styrol, 27 Gew.-% Acrylnitril und 0,12 Gew.-Teile tert.-Dodecylmercaptan innerhalb 5 Stunden gleichmäßig zudosiert, parallel dazu wird 1 Gew.-Teil (gerechnet als Festsubstanz) des Natriumsalzes eines Harzsäuregemisches (Dresinate 731, gelöst in alkalisch eingestelltem Wasser) über einen Zeitraum von 5 Stunden zudosiert. Im Laufe der 5 Stunden wird die Reaktionstemperatur von 55°C auf 80°C angehoben. Nach einer zweistündigen Nachreaktionszeit bei 80°C wird der Pfropflatex nach Zugabe von ca. 1,0 Gew.-Teilen eines phenolischen Antioxidans mit einem Magnesiumsulfat / Essigsäure - Gemisch koaguliert und nach dem Waschen mit Wasser das resultierende feuchte Pulver bei 70°C getrocknet.

### ABS-Pfropfpolymerisat 4 (erfindungsgemäß)

20 Gew.-Teile (gerechnet als Feststoff) eines unter Verwendung eines Polybutadiensaatiatex mit einem d₅₀- Wert von 48 nm durch radikalische Saatpolymerisation hergestellten anionisch emulgierten Polybutadienlatex mit einem mittleren Teilchendurchmesser d₅₀ von 185 nm, einer Breite der Teilchengrößenverteilung d₉₀-d₁₀ von 51 nm und einem Gelgehalt von 69 Gew.-%, 27,5 Gew.-Teile (gerechnet als Feststoff) eines unter Verwendung eines Polybutadienlatex mit einem d₅₀-Wert von 125 nm als Saatlatex durch radikalische Saatpolymerisation hergestellten anionisch emulgierten Polybutadienlatex mit einem mittleren Teilchendurchmesser d₅₀ von 297 nm, einer Breite der Teilchengrößenverteilung d₉₀-d₁₀ von 77 nm und einem Gelgehalt von 61 Gew.-% und 12,5 Gew.-Teile (gerechnet als Feststoff) eines unter Verwendung eines Polybutadiensaatlatex mit einem d₅₀-Wert von 185 nm als Saatlatex durch radikalische Saatpolymerisation hergestellten anionisch emulgierten Polybutadienlatex mit einem mittleren Teilchendurchmesser d₅₀ von 422 nm, einer Breite der Teilchengrößenverteilung d₉₀-d₁₀ von 63 nm und einem Gelgehalt von 80 Gew.-% werden mit Wasser auf einem Feststoffgehalt von ca. 20 Gew.-% gebracht, wonach auf 55°C erwärmt und mit 0,5 Gew.-Teilen Kaliumperoxodisulfat (gelöst in Wasser) versetzt wird.

Danach werden 40 Gew.-Teile eines Gemisches aus 73 Gew.-% Styrol, 27 Gew.-% Acrylnitril und 0,12 Gew.-Teile tert.-Dodecylmercaptan innerhalb 5 Stunden gleichmäßig zudosiert, parallel dazu wird 1 Gew.-Teil (gerechnet als Festsubstanz) des Natriumsalzes eines Harzsäuregemisches (Dresinate 731, gelöst in alkalisch eingestelltem Wasser) über einen Zeitraum von 5 Stunden zudosiert. Im Laufe der 5 Stunden wird die Reaktionstemperatur von 55°C auf 80°C angehoben. Nach einer zweistündigen Nachreaktionszeit bei 80°C wird der Pfropflatex nach Zugabe von ca. 1,0 Gew.-Teilen eines phenolischen Antioxidans mit einem Magnesiumsulfat / Essigsäure - Gemisch koaguliert und nach dem Waschen mit Wasser das resultierende feuchte Pulver bei 70°C getrocknet.

### ABS-Pfropfpolymerisat 5 (erfindungsgemäß)

17,5 Gew.-Teile (gerechnet als Feststoff) eines unter Verwendung eines Polybutadienlatex mit einem d₅₀-Wert von 46 nm als Saatlatex durch radikalische Saatpolymerisation hergestellten anionisch emulgierten Polybutadienlatex mit einem mittleren Teilchendurchmesser d₅₀ von 189 nm, einer Breite der Teilchengrößenverteilung d₉₀-d₁₀ von 50 nm und einem Gelgehalt von 76 Gew.-%, 35 Gew.-Teile (gerechnet als Feststoff) eines unter Verwendung eines Polybutadienlatex mit einem d₅₀-Wert von 119 nm als Saatlatex durch radikalische Saatpolymerisation hergestellten anionisch emulgierten Polybutadienlatex mit einem mittleren Teilchendurchmesser d₅₀ von 285 nm, einer Breite der Teilchengrößenverteilung d₉₀-d₁₀ von 60 nm und einem Gelgehalt von 67 Gew.-% und 17,5 Gew.-Teile (gerechnet als Feststoff) eines unter Verwendung eines Polybutadienlatex mit einem d₅₀-Wert von 189 nm als Saatlatex durch radikalische Saatpolymerisation hergestellten anionisch emulgierten Polybutadienlatex mit einem mittleren Teilchendurchmesser d₅₀ von 399 nm, einer Breite der Teilchengrößenverteilung d₉₀-d₁₀ von 56 nm und einem Gelgehalt von 85 Gew.-% werden mit Wasser auf einem Feststoffgehalt von ca. 20 Gew.-% gebracht, wonach auf 55°C ervärmt und mit 0,5 Gew.-Teilen Kaliumperoxodisulfat (gelöst in Wasser) versetzt wird.

Danach werden 30 Gew.-Teile eines Gemisches aus 73 Gew.-% Styrol, 27 Gew.-% Acrylnitril und 0,1 Gew.-Teile tert.-Dodecylmercaptan innerhalb 6 Stunden gleichmäßig zudosiert. Die weitere Herstellung erfolgt wie bei ABS-Pfropfpolymerisat 1 beschrieben.

### ABS-Pfropfpolymerisat 6 (erfindungsgemäß)

15 Gew.-Teile (gerechnet als Feststoff) eines unter Verwendung eines Butadien/Styrol = 90 : 10 - Copolymerlatex mit einem d₅₀-Wert von 39 nm als Saatlatex durch radikalische Saatpolymerisation hergestellten anionisch emulgierten Butadien/Styrol = 90 : 10 - Copolymerlatex mit einem mittleren Teilchendurchmesser d₅₀ von 176 nm, einer Breite der Teilchengrößenverteilung d₉₀-d₁₀ von 48 nm und einem Gelgehalt von 60 Gew.-%, 30 Gew.-Teile (gerechnet als Feststoff) eines unter Verwendung eines Polybutadienlatex mit einem d₅₀-Wert von 119 nm als Saatlatex durch radikalische Saatpolymerisation hergestellten anionisch emulgierten Polybutadienlatex mit einem mittleren Teilchendurchmesser d₅₀ von 285 nm, einer Breite der Teilchengrößenverteilung d₉₀-d₁₀ von 60 nm und einem Gelgehalt von 67 Gew.-% und 15 Gew.-Teile (gerechnet als Feststoff) eines unter Verwendung eines Butadien/Styrol = 90: 10 - Copolymerlatex mit einem d₅₀-Wert von 176 nm als Saatlatex durch radikalische Saatpolymerisation hergestellten anionisch emulgierten Butadien/Styrol = 90 : 10 - Copolymerlatex mit einem mittleren Teilchendurchmesser d₅₀ von 391 nm, einer Breite der Teilchengrößenverteilung d₉₀-d₁₀ von 75 nm und einem Gelgehalt von 74 Gew.-% werden mit Wasser auf einen Feststoffgehalt von ca. 20 Gew.-% gebracht, wonach auf 55°C erwärmt und mit 0,5 Gew.-Teilen Kaliumperoxodisulfat (gelöst in Wasser) versetzt wird.

Danach werden 40 Gew.-Teile eines Gemisches aus 73 Gew.-% Styrol, 27 Gew.-% Acrylnitril innerhalb 5 Stunden gleichmäßig zudosiert, 0,12 Gew.-Teile tert.-Dodecylmercaptan werden gleichmäßig innerhalb der ersten 4 Stunden zudosiert. Parallel dazu wird 1 Gew.-Teil (gerechnet als Festsubstanz) des Natriumsalzes eines Harzsäuregemisches (Dresinate 731, Abieta Chemie GmbH, Gersthofen, Deutschland, gelöst in alkalisch eingestelltem Wasser) über einen Zeitraum von 5 Stunden zudosiert. Im Laufe der 5 Stunden wird die Reaktionstemperatur von 55°C auf 80°C angehoben. Die weitere Herstellung erfolgt wie bei ABS-Pfropfpolymerisat 1 beschrieben.

### ABS-Pfropfpolymerisat 7 (Vergleichsmaterial, nicht erfindungsgemäß)

Die unter "ABS-Pfropfpolymerisat 1" beschriebene Herstellung wird wiederholt, wobei als feinteilige Kautschukkomponente ein ohne Verwendung von Saatlatex hergestellter Polybutadienlatex mit einem mittleren Teilchendurchmesser d₅₀ von 183 nm, einer Breite der Teilchengrößenverteilung d₉₀ - d₁₀ von 103 nm und einem Gelgehalt von 79 Gew.-% , als mittlere Kautschukkomponente ein ohne Verwendung von Saatlatex hergestellter Polybutadienlatex mit einem mittleren Teilchendurchmesser d₅₀ von 305 nm, einer Breite der Teilchengrößenverteilung d₉₀ - d₁₀ von 108 nm und einem Gelgehalt von 55 Gew.-%, und als grobteilige Kautschukkomponente ein ohne Verwendung von Saatlatex hergestellter Polybutadienlatex mit einem mittleren Teilchendurchmesser d₅₀ von 423 nm, einer Breite der Teilchengrößenverteilung d₉₀ - d₁₀ von 99 nm und einem Gelgehalt von 78 Gew.-% eingesetzt wurden.

### ABS-Pfropfpolymerisat 8 (Vergleichsmaterial, nicht erfindungsgemäß)

Die unter "ABS-Pfropfpolymerisat 1" beschriebene Herstellung wird wiederholt, wobei anstelle des Polybutadienlatexgemisches 60 Gew.-Teile (gerechnet als Feststoff) eines ohne Verwendung von Saatlatex hergestellten Polybutadienlatex mit einem mittleren Teilchendurchmesser d₅₀ von 131 nm, einer Breite der Teilchengrößenverteilung d₉₀ - d₁₀ von 76 nm und einem Gelgehalt von 88 Gew.-% eingesetzt wurden.

### ABS-Pfropfpolymerisat 9 (Vergleichsmaterial, nicht erfindungsgemäß)

Die unter "ABS-Pfropfpolymerisat 1" beschriebene Herstellung wird wiederholt, wobei anstelle des Polybutadienlatexgemisches 60 Gew.-Teile (gerechnet als Feststoff) eines ohne Verwendung von Saatlatex hergestellten Polybutadienlatex mit einem mittleren Teilchendurchmesser d₅₀ von 423 nm, einer Breite der Teilchengrößenverteilung d₉₀ - d₁₀ von 99 nm und einem Gelgehalt von 78 Gew.-% eingesetzt wurden.

### Harzkomponente 1

Statistisches Styrol / Acrylnitril - Copolymerisat (Styrol : Acrylnitril - Gewichtsverhältnis 72 : 28) mit einem M̅_{w} von ca. 85.000 und M̅_{w} /M̅ₙ -1 ≤ 2 erhalten durch radikalische Lösungspolymerisation.

### Harzkomponente 2

Statistisches Styrol / Acrylnitril - Copolymerisat (Styrol : Acrylnitril - Gewichtsverhältnis 72 : 28) mit einem M̅_{w} von ca. 115.000 und M̅_{w} / M̅ₙ -1 ≤ 2 erhalten durch radikalische Lösungspolymerisation.

### Formmassen

Die oben beschriebenen Polymerkomponenten werden in den in Tabelle 1 angegebenen Anteilen, 2 Gew.-Teilen Ethylendiaminbisstearylamid und 0,1 Gew.-Teilen eines Silikonöls in einen Innenkneter vermischt und nach Granulierung zu Prüfstäben und zu einer ebenen Platte (zur Beurteilung der Oberfläche) verarbeitet.

Die folgenden Daten werden ermittelt:
Kerbschlagzähigkeit bei Raumtemperatur (aₖ) nach ISO 180/1A (Einheit: kJ/m²), thermoplastische Fließfähigkeit (MVI) nach DIN 53735U (Einheit : cm³/10min) und Oberflächenglanz nach DIN 67530 bei einem Reflektionswinkel von 20° (Reflektometerwert).

Aus den Beispielen (Prüfdaten siehe Tabelle 2) ist ersichtlich, dass sich die erfindungsgemäßen Formmassen durch eine Kombination hoher Zähigkeiten, sehr guter Verarbeitbarkeit und extrem hoher Glanzwerte auszeichnen.

**Tabelle 1 : Zusammensetzungen der Formmassen**

| Beispiel | ABS- Pfropfpolymer 1 (Gew.- Teile) | ABS- Pfropfpolymer 2 (Gew.- Teile) | ABS- Pfropfpolymer 3 (Gew.- Teile) | ABS- Pfropfpolymer 4 (Gew.- Teile) | ABS- Pfropfpolymer 5 (Gew.- Teile) | ABS- Pfropfpolymer 6 (Gew.- Teile) | ABS- Pfropfpolymer 7 (Gew.- Teile) | ABS- Pfropfpolymer 8 (Gew.- Teile) | ABS- Pfropfpolymer 9 (Gew.-Teile) | Harzkomponente 1 (Gew.-Teile) | Harzkomponente 2 (Gew.-Teile) |
|---|---|---|---|---|---|---|---|---|---|---|---|
| 1 | 27 | -- | -- | -- | -- | -- | -- | -- | -- | 73 | -- |
| 2 | -- | 27 | -- | -- | -- | -- | -- | -- | -- | 73 | -- |
| 3 | -- | -- | 27 | -- | -- | -- | -- | -- | -- | 73 | -- |
| 4 | -- | -- | -- | 27 | -- | | -- | -- | -- | 73 | -- |
| 5 | -- | -- | -- | -- | 23,2 | -- | -- | -- | -- | 76,8 | -- |
| 6 | -- | -- | -- | -- | -- | 27 | -- | -- | -- | 73 | -- |
| 7(Vergleich) -- | -- | -- | -- | -- | -- | -- | 27 | -- | -- | 73 | -- |
| 8(Vergleich) | -- | -- | -- | -- | -- | -- | -- | 13,5 | 13,5 | 73 | -- |
| 9 | 40 | -- | -- | -- | -- | -- | -- | -- | -- | -- | 60 |
| 10 | -- | -- | 40 | -- | -- | -- | -- | -- | -- | -- | 60 |
| 11(Vergleich) | -- | -- | -- | -- | -- | -- | -- | -- | 40 | -- | 60 |

**Tabelle 2 : Prüfdaten der Formmassen**

| Beispiel | aₖ (kJ/m²) | MVI (cm³/10 min) | Glanzgrad |
|---|---|---|---|
| 1 | 18.1 | 39.9 | 98 |
| 2 | 19.2 | 39.0 | 96 |
| 3 | 19.4 | 39.1 | 96 |
| 4 | 17.1 | 40.2 | 96 |
| 5 | 19.4 | 38.3 | 95 |
| 6 | 18.6 | 40.1 | 96 |
| 7 (Vergleich) | 19.1 | 36.2 | 92 |
| 8 (Vergleich) | 18.3 | 35.2 | 93 |
| 9 | 32.0 | 8.1 | 95 |
| 10 | 30.8 | 8.5 | 95 |
| 11 (Vergleich) | 30.3 | 7.6 | 88 |

## Patentansprüche

1. Polymerzusammensetzungen enthaltend
I) ein Pfropfkautschukpolymerisat, welches erhältlich ist durch Emulsionspolymerisation von Styrol und Acrylnitril im Gewichtsverhältnis 95 : 5 bis 50 : 50, wobei Styrol und/oder Acrylnitril ganz oder teilweise ersetzt werden kann durch α-Methylstyrol, Methylmethacrylat oder N-Phenyl-maleinimid oder Mischungen hieraus, in Gegenwart einer Mischung aus einem Butadienpolymerisatlatex (A) mit einem mittleren Teilchendurchmesser d₅₀ ≤ 250 nm und einer Breite der Teilchengrößenverteilung (gemessen als d₉₀-d₁₀ aus der integralen Teilchengrößenverteilung) von 20 bis 80 nm, und einem Gelgehalt von 30 bis 95 Gew.%, einem Butadienpolymerisatlatex (B) mit einem mittleren Teilchendurchmesser d₅₀ >250 bis 350 nm, einer Breite der Teilchengrößenverteilung (gemessen als d₉₀-d₁₀ aus der integralen Teilchengrößenverteilung) von 30 bis 100 und einem Gelgebalt von 30 bis 80 Gew.-%, und einem Butadienpolymerisatlatex (C) mit einem mittleren Teilchendurchmesser d₅₀ > 350 nm, einer Breite der Teilchengrößenverteilung (gemessen als d₉₀-d₁₀ aus der integralen Teilchengrößenverteilung) von 40 bis 150 nm, und einem Gelgehalt von 50 bis 95 Gew,-%, wobei die Butadienpolymerisatlatices jeweils 0 bis 50 Gew.-% eines weiteren Vinylmonomeren copolymerisiert enthalten und wobei das Pfropfkautschukpolymerisat kautschukgehalte über 50 Gew.-% aufweist, und
II) mindestens ein kautschukfreies Copolymerisat aus Styrol und Acrylnitril im Gewichtsverhältnis 95 : 5 bis 50 : 50, wobei Styrol und/oder Acrylnitril ganz oder teilweise durch α-Methylstyrol, Methylmethacrylat, oder N-Phenylmaleinimid oder Mischungen hieraus ersetzt werden kann,
wobei alle drei Butadienpolymerisatlatices (A), (B) und (C) durch Saatpolymerisation hergestellt werden und das Pfropfkautschukpolymerisat I) im einem einzigen Verfahrensschnitt hergestellt wird.

2. Polymerzusammensetzungen gemäß Anspruch 1, wobei der Butadienpolymerisatlatex (A) einen mittleren Teilchendurchmesser d₅₀ von 100 bis 240 nm, eine Breite der Teilchengrößenverteilung (gemessen als d₉₀-d₁₀ aus der integralen Teilchengrößenverteilung) von 30 bis 60 nm und einen Gelgehalt von 40 bis 90 Gew.-%, der Butadienpolymerisatlatex (B) einen mittleren Teilchendurchmesser d₅₀ von 260 bis 340 nm, eine Breite der Teilchengrößenverteilung (gemessen als d₉₀-d₁₀ aus der integralen Teilchengrößenverteilung) von 40 bis 80 nm, und einem Gelgehalt von 40 bis 75 Gew.-%, und der Butadienpolymerisatlatex (C) einen mittleren Teilchendurchmesser d₅₀ von 360 bis 450 nm, einer Breite der Teilchengrößenverteilung (gemessen als d₉₀-d₁₀ aus der integralen Teilchengrößenverteilung) von 50 bis 100 nm, und einen Gelgehalt von 55 bis 90 Gcw.-% aufweisen.

3. Polymerzusammensetzungen gemäß Anspruch 1 und 2, wobei der Butadienpolymerisatlatex (A) einen mittleren Teilchendurchmesser d₅₀ von 130 bis 230 nm und eine Breite der Teilchengrößenverteilung (gemessen als d₉₀-d₁₀ aus der integralen Teilchengrößenverteilung) von 30 bis 60 nm, und einem Gelgehalt von 50 bis 85 Gew.-%, der Butadienpolymerisatlatex (B) einen mittleren Teilchendurchmesser von d₅₀ 270 bis 320 nm, eine Breite der Teilchengrößenverteilung (gemessen als d₉₀-d₁₀ aus der integralen Teilchengrößenverteilung) von 40 bis 80 nm und einen Gelgehalt von 45 bis 70 Gew.-%, und der Butadienpolymerisatlatex (C) einen mittleren Teilchendurchmesser von d₅₀ 375 bis 430 run, eine Breite der Teilchengrößenverteilung (gemessen als d₉₀-d₁₀ aus der integralen Teilchengrößenverteilung) von 50 bis 100 nm und einen Gelgehalt von 60 bis 85 Gew.-%, aufweisen.

4. Verfahren zur Herstellung einer Polymerzusammensetzung, wobei ein Pfropfkautschukpolymerisat, welches erhältlich ist durch Emulsionspolymerisation von Styrol und Acrylnitril im Gewichtsverhältnis 95 : 5 bis 50 : 50, wobei Styrol und/oder Acrylnitril ganz oder teilweise ersetzt werden kann durch α-Methylstyrol, Methylmethacrylat oder N-Phenylmaleinimid oder Mischungen hieraus, in Gegenwart einer Mischung aus einem Butadienpolymerisatlatex (A) mit einem mittleren Teilchendurchmesser d₅₀ ≤ 250 nm und einer Breite der Teilchengrößenverteilung (gemessen als d₉₀-d₁₀ aus der integralen Teilchengrößenverteilung) von 20 bis 80 nm, und einem Gelgehalt von 30 bis 95 Gew.-%, einem Butadienpolymerisatlatex (B) mit einem mittleren Teilchendurchmesser d₅₀ >250 bis 350 nm, einer Breite der Teilchengrößenverteilung (gemessen als d₉₀-d₁₀ aus der integralen Teilchengrößenverteilung) von 30 bis 100 nm, und einem Gelgehalt von 30 bis 80 Gew.-%, und einem Butadienpolymerisatlatex (C) mit einem mittleren Teilchendurchmesser d₅₀ >350 nm, einer Breite der Teilchengrößenverteilung (gemessen als d₉₀-d₁₀ aus der integralen Teilchengrößenverteilung) von 40 bis 150 nm, und einem Gelgehalt von 50 bis 95 Gew.-%, unter Verwendung von durch Saatpolymerisation hergestellten Butadienpolymerisatlatices (A), (B) und (C) wobei die Butadienpolymerisatlatices jeweils 0 bis 50 Gew.-% eines weiteren Vinylmonomeren copolymerisiert enthalten und wobei das Pfropfkantschuk polymerisat in einem einzigen Verfahrensschritt wird und Kautschukgehalte über ist, und das Pfropfpolymerisat mit mindestens einem kautschukfreien Copolymerisat aus Styrol und Acrylnitril im Gewichtsverhältnis 95 : 5 bis 50 : 50, wobei Styrol und/oder Acrylnitril ganz oder teilweise durch α-Methylstyrol, Methylmethacrylat, oder N-Phenylmaleinimid oder Mischungen hieraus ersetzt werden kann, gemischt wird.

5. Polymerzusammensetzungen gemäß Ansprüchen 1 bis 3 enthaltend zusätzlich mindestens ein Harz ausgewählt aus aromatischem Polycarbonat, aromatischem Polyestercarbonat, Polyester, Polyamid oder Mischungen daraus.

6. Polymerzusammensetzungen gemäß Ansprüchen 1 bis 3, **dadurch gekennzeichnet, dass** bei der Erzeugung der Pfropfkautschukpolymerisate der Monomerenzulauf derart durchgeführt wird, dass innerhalb der ersten Hälfte der Gesamtmonomerzudosierzeit 55 bis 90 Gew.-% der gesamten bei der Pfropfpolymerisation einzusetzenden. Monomeren zudosiert werden und der verbleibende Monomeranteil innerhalb der zweiten Hälfte der Gesamtmonomerzudosierzeit zudosiert wird.

7. Polymerzusammensetzungen gemäß Ansprüchen 1 bis 3, **dadurch gekennzeichnet, dass** bei der Erzeugung der Pfropfkautschukpolymerisate der Temperaturunterschied zwischen Beginn und Ende der Pfropfreaktion mindestens 15°C beträgt.

8. Verfahren zur Herstellung von Polymerzusammensctzungen gemäß Ansprüchen 1 bis 3, **dadurch gekennzeichnet, dass** man die Komponenten I) und II) vermischt und bei erhöhter Temperatur compoundiert und extrudiert.

9. Verwendung der Polymerzusammensetzungen gemäß Ansprüchen 1 bis 3 zur Herstellung von Formteilen.

10. Formteile erhältlich aus Polymerzusammensetzungen gemäß Ansprüchen 1 bis 3.

11. Pfropfkautschukpolymerisat, erhältlich durch Emulsionspolymerisation von Styrol und Acrylnitril im Gewichtsverhältnis 95 : 5 bis 50 : 50, wobei Styrol und/oder Acrylnitril ganz oder teilweise ersetzt werden kann durch α-Methylstyrol, Methylmethacrylat oder N-Phenylmaleinimid oder Mischungen hieraus, in Gegenwart einer Mischung aus einem Butadienpolymerisatlatex (A) mit einem mittleren Teilchendurchmesser d₅₀ ≤ 250 nm und einer Breite der Teilchengrößenverteilung (gemessen als d₉₀-d₁₀ aus der integralen Teilchengrößenverteilung) von 20 bis 80 nm und einem Gelgehalt von 30 bis 95 Gew.-%, einem Butadienpolymerisatlatex (B) mit einem mittleren Teilchendurchmesser d₅₀ >250 bis 350 nm, einer Breite der Teilchengrößenverteilung (gemessen als d₉₀-d₁₀ aus der integralen Teilchengrößenveiteilung) von 30 bis 100 nm, und einem Gelgehalt von 30 bis 80 Gew.-%, und einem Butadienpolymerisatlatex (C) mit einem mittleren Teilchendurchmesser d₅₀ >350 nm, einer Breite der Teilchengrößenverteilung (gemessen als d₉₀-d₁₀ aus der integralen Teilchengrößenverteilung) von 40 bis 150 nm., und einem Gelgehalt von 50 bis 95 Gew.-%, wobei die Butadienpolymerisatlatices jeweils 0 bis 50 Gew.-% eines weiteren Vinylmonomeren copolymerisiert enthalten, wobei das Propfkautschukpolymerisat in einem einzigen Verfahrensschritt hergestellt wird und Kautschukgehalte über 50 Gew.-% aufweist und alle drei Butadienpolymerisatlatices (A), (B) und (C) durch Saatpolymerisation hergestellt werden.

## Claims

1. Polymer compositions containing
I) a graft rubber polymer obtainable by emulsion polymerisation of styrene and acrylonitrile in a weight ratio of 95:5 to 50:50, wherein styrene and/or acrylonitrile can be wholly or partly replaced by α-methylstyrene, methyl methacrylate or N-phenylmaleimide or mixtures thereof, in the presence of a mixture of a butadiene polymer latex (A) with a median particle diameter d₅₀ ≤ 250 nm and a particle size distribution width (measured as d₉₀-d₁₀ from the cumulative particle size distribution) of 20 to 80 nm and a gel content of 30 to 95 wt.%, a butadiene polymer latex (B) with a median particle diameter d₅₀ > 250 to 350 nm, a particle size distribution width (measured as d₉₀-d₁₀ from the cumulative particle size distribution) of 30 to 100 nm and a gel content of 30 to 80 wt.% and a butadiene polymer latex (C) with a median particle diameter d₅₀ > 350 nm, a particle size distribution width (measured as d₉₀-d₁₀ from the cumulative particle size distribution) of 40 to 150 nm and a gel content of 50 to 95 wt.%, wherein the butadiene polymer latices each contain 0 to 50 wt.% of a further vinyl monomer incorporated by copolymerisation and wherein the graft rubber polymer has rubber contents of greater than 50 wt.%, and
II) at least one rubber-free copolymer of styrene and acrylonitrile in a weight ratio of 95:5 to 50:50, wherein styrene and/or acrylonitrile can be wholly or partly replaced by α-methylstyrene, methyl methacrylate or N-phenylmaleimide or mixtures thereof,
wherein all three butadiene polymer latices (A), (B) and (C) are produced by seed polymerisation and the graft rubber polymer I) is produced in a single processing step.

2. Polymer compositions according to Claim 1, wherein the butadiene polymer latex (A) has a median particle diameter d₅₀ of 100 to 240 nm, a particle size distribution width (measured as d₉₀-d₁₀ from the cumulative particle size distribution) of 30 to 60 nm and a gel content of 40 to 90 wt.%, the butadiene polymer latex (B) has a median particle diameter d₅₀ of 260 to 340 nm, a particle size distribution width (measured as d₉₀-d₁₀ from the cumulative particle size distribution) of 40 to 80 nm and a gel content of 40 to 75 wt.% and the butadiene polymer latex (C) has a median particle diameter d₅₀ of 360 to 450 nm, a particle size distribution width (measured as d₉₀-d₁₀ from the cumulative particle size distribution) of 50 to 100 nm and a gel content of 55 to 90 wt.%.

3. Polymer compositions according to Claims 1 and 2, wherein the butadiene polymer latex (A) has a median particle diameter d₅₀ of 130 to 230 nm and a particle size distribution width (measured as d₉₀-d₁₀ from the cumulative particle size distribution) of 30 to 60 nm and a gel content of 50 to 85 wt.%, the butadiene polymer latex (B) has a median particle diameter d₅₀ of 270 to 320 nm, a particle size distribution width (measured as d₉₀-d₁₀ from the cumulative particle size distribution) of 40 to 80 nm and a gel content of 45 to 70 wt.% and the butadiene polymer latex (C) has a median particle diameter d₅₀ of 375 to 430 nm, a particle size distribution width (measured as d₉₀-d₁₀ from the cumulative particle size distribution) of 50 to 100 nm and a gel content of 60 to 85 wt.%.

4. Process for producing a polymer composition, wherein a graft rubber polymer obtainable by emulsion polymerisation of styrene and acrylonitrile in a weight ratio of 95:5 to 50:50, wherein styrene and/or acrylonitrile can be wholly or partly replaced by α-methylstyrene, methyl methacrylate or N-phenylmaleimide or mixtures thereof, in the presence of a mixture of a butadiene polymer latex (A) with a median particle diameter d₅₀ ≤ 250 nm and a particle size distribution width (measured as d₉₀-d₁₀ from the cumulative particle size distribution) of 20 to 80 nm and a gel content of 30 to 95 wt.%, a butadiene polymer latex (B) with a median particle diameter d₅₀ > 250 to 350 nm, a particle size distribution width (measured as d₉₀-d₁₀ from the cumulative particle size distribution) of 30 to 100 nm and a gel content of 30 to 80 wt.% and a butadiene polymer latex (C) with a median particle diameter d₅₀ > 350 nm, a particle size distribution width (measured as d₉₀-d₁₀ from the cumulative particle size distribution) of 40 to 150 nm and a gel content of 50 to 95 wt.%, using butadiene polymer latices (A), (B) and (C) produced by seed polymerisation, wherein the butadiene polymer latices each contain 0 to 50 wt.% of a further vinyl monomer incorporated by copolymerisation and wherein the graft rubber polymer is produced in a single processing step and has rubber contents of greater than 50 wt.% and the graft polymer is mixed with at least one rubber-free copolymer of styrene and acrylonitrile in a weight ratio of 95:5 to 50:50, wherein styrene and/or acrylonitrile can be wholly or partly replaced by α-methylstyrene, methyl methacrylate or N-phenylmaleimide or mixtures thereof.

5. Polymer compositions according to Claims 1 to 3 containing in addition at least one resin selected from the group consisting of aromatic polycarbonate, aromatic polyester carbonate, polyester, polyamide or mixtures thereof.

6. Polymer compositions according to Claims 1 to 3, **characterised in that** in the production of the graft rubber polymers the monomers are added in such a way that 55 to 90 wt.% of all the monomers used in the graft polymerization are metered in within the first half of the overall time for metering in the monomers and the remaining proportion of the monomers is metered in within the second half of the overall time for metering in the polymers.

7. Polymer compositions according to Claims 1 to 3, **characterised in that** in the production of the graft rubber polymers the temperature difference between the start and end of the grafting reaction is at least 15°C.

8. Process for producing polymer compositions according to Claims 1 to 3, **characterised in that** the components I) and II) are mixed and compounded and extruded at elevated temperature.

9. Use of the polymer compositions according to Claims 1 to 3 for producing moulded articles.

10. Moulded articles obtainable from polymer compositions according to Claims 1 to 3.

11. Graft rubber polymer obtainable by emulsion polymerisation of styrene and acrylonitrile in a weight ratio of 95:5 to 50:50, wherein styrene and/or acrylonitrile can be wholly or partly replaced by α-methylstyrene, methyl methacrylate or N-phenylmaleimide or mixtures thereof, in the presence of a mixture of a butadiene polymer latex (A) with a median particle diameter d₅₀≤ 250 nm and a particle size distribution width (measured as d₉₀-d₁₀ from the cumulative particle size distribution) of 20 to 80 nm and a gel content of 30 to 95 wt.%, a butadiene polymer latex (B) with a median particle diameter d₅₀ > 250 to 350 nm, a particle size distribution width (measured as d₉₀-d₁₀ from the cumulative particle size distribution) of 30 to 100 nm and a gel content of 30 to 80 wt.% and a butadiene polymer latex (C) with a median particle diameter d₅₀ > 350 nm, a particle size distribution width (measured as d₉₀-d₁₀ from the cumulative particle size distribution) of 40 to 150 nm and a gel content of 50 to 95 wt.%, wherein the butadiene polymer latices each contain 0 to 50 wt.% of a further vinyl monomer incorporated by copolymerisation and wherein the graft rubber polymer is produced in a single processing step and has rubber contents of greater than 50 wt.%, and all three butadiene polymer latices (A), (B) and (C) are produced by seed polymerisation.

## Revendications

1. Compositions polymères contenant :
I) un polymère de caoutchouc greffé, qui peut être obtenu par polymérisation en émulsion de styrène et d'acrylonitrile en un rapport de poids de 95:5 à 50:50, le styrène et/ou l'acrylonitrile pouvant être remplacés complètement ou partiellement par de l'α-méthylstyrène, du méthacrylate de méthyle ou du N-phénylmaléimide ou des mélanges de ceux-ci, en présence d'un mélange constitué d'un latex de polymère de butadiène (A) ayant un diamètre de particule moyen d₅₀ ≤ 250 nm et une largeur de répartition granulométrique (mesurée en tant que d₉₀-d₁₀ à partir de la répartition granulométrique intégrale) de 20 à 80 nm, et une teneur en gel de 30 à 95 % en poids, d'un latex de polymère de butadiène (B) ayant un diamètre de particule moyen d₅₀ > 250 à 350 nm, une largeur de répartition granulométrique (mesurée en tant que d₉₀-d₁₀ à partir de la répartition granulométrique intégrale) de 30 à 100 nm, et une teneur en gel de 30 à 80 % en poids et d'un latex de polymère de butadiène (C) ayant un diamètre de particule moyen d₅₀ > 350 nm, une largeur de répartition granulométrique (mesurée en tant que d₉₀-d₁₀ à partir de la répartition granulométrique intégrale) de 40 à 150 nm, et une teneur en gel de 50 à 95 % en poids, les latex de polymère de butadiène contenant à l'état copolymérisé respectivement 0 à 50 % en poids d'un autre monomère de vinyle, et le polymère de caoutchouc greffé présentant des teneurs en caoutchouc supérieures à 50 % en poids, et
II) au moins un copolymère exempt de caoutchouc constitué de styrène et d'acrylonitrile en un rapport de poids de 95:5 à 50:50, le styrène et/ou l'acrylonitrile pouvant être remplacés complètement ou partiellement par de l'α-méthylstyrène, du méthacrylate de méthyle ou du N-phénylmaléimide ou des mélanges de ceux-ci,
les trois latex de polymère de butadiène (A), (B) et (C) étant tous préparés grâce à une polymérisation en grains et le polymère de caoutchouc greffé I) étant préparé en une étape de procédé unique.

2. Compositions polymères selon la revendication 1, dans lesquelles le latex de polymère de butadiène (A) présente un diamètre de particule moyen d₅₀ de 100 à 240 nm, une largeur de répartition granulométrique (mesurée en tant que d₉₀-d₁₀ à partir de la répartition granulométrique intégrale) de 30 à 60 nm et une teneur en gel de 40 à 90 % en poids, le latex de polymère de butadiène (B) présente un diamètre de particule moyen d₅₀ de 260 à 340 nm, une largeur de répartition granulométrique (mesurée en tant que d₉₀-d₁₀ à partir de la répartition granulométrique intégrale) de 40 à 80 nm, et une teneur en gel de 40 à 75 % en poids et le latex de polymère de butadiène (C) présente un diamètre de particule moyen d₅₀ de 360 à 450 nm, une largeur de répartition granulométrique (mesurée en tant que d₉₀-d₁₀ à partir de la répartition granulométrique intégrale) de 50 à 100 nm, et une teneur en gel de 55 à 90 % en poids.

3. Compositions polymères selon la revendication 1 et 2, dans lesquelles le latex de polymère de butadiène (A) présente un diamètre de particule moyen d₅₀ de 130 à 230 nm et une largeur de répartition granulométrique (mesurée en tant que d₉₀-d₁₀ à partir de la répartition granulométrique intégrale) de 30 à 60 nm, et une teneur en gel de 50 à 85 % en poids, le latex de polymère de butadiène (B) présente un diamètre de particule moyen d₅₀ de 270 à 320 nm, une largeur de répartition granulométrique (mesurée en tant que d₉₀-d₁₀ à partir de la répartition granulométrique intégrale) de 40 à 80 nm et une teneur en gel de 45 à 70 % en poids, et le latex de polymère de butadiène (C) présente un diamètre de particule moyen d₅₀ de 375 à 430 nm, une largeur de répartition granulométrique (mesurée en tant que d₉₀-d₁₀ à partir de la répartition granulométrique intégrale) de 50 à 100 nm et une teneur en gel de 60 à 85 % en poids.

4. Procédé pour la préparation d'une composition polymère, dans laquelle un polymère de caoutchouc greffé, qui peut être obtenu par polymérisation en émulsion de styrène et d'acrylonitrile en un rapport de poids de 95:5 à 50:50, le styrène et/ou l'acrylonitrile pouvant être remplacés complètement ou partiellement par de l'α-méthylstyrène, du méthacrylate de méthyle ou du N-phénylmaléimide ou des mélanges de ceux-ci, est préparé en présence d'un mélange constitué d'un latex de polymère de butadiène (A) ayant un diamètre de particule moyen d₅₀≤ 250 nm, une largeur de répartition granulométrique (mesurée en tant que d₉₀-d₁₀ à partir de la répartition granulométrique intégrale) de 20 à 80 nm et une teneur en gel de 30 à 95 % en poids, d'un latex de polymère de butadiène (B) ayant un diamètre de particule moyen d₅₀ > 250 à 350 nm, une largeur de répartition granulométrique (mesurée en tant que d₉₀-d₁₀ à partir de la répartition granulométrique intégrale) de 30 à 100 nm et une teneur en gel de 30 à 80 % en poids, et d'un latex de polymère de butadiène (C) ayant un diamètre de particule moyen d₅₀ > 350 nm, une largeur de répartition granulométrique (mesurée en tant que d₉₀-d₁₀ à partir de la répartition granulométrique intégrale) de 40 à 150 nm et une teneur en gel de 50 à 95 % en poids, avec utilisation des latex de polymère de butadiène (A), (B) et (C) préparés par polymérisation en grains, les latex de polymère de butadiène contenant à l'état copolymérisé respectivement 0 à 50 % en poids d'un autre monomère de vinyle et le polymère de caoutchouc greffé étant préparé en une étape de procédé unique et présentant des teneurs en caoutchouc supérieures à 50 % en poids, et le polymère greffé est mélangé avec au moins un copolymère exempt de caoutchouc constitué de styrène et d'acrylonitrile en un rapport de poids de 95:5 à 50:50, le styrène et/ou l'acrylonitrile pouvant être remplacés complètement ou partiellement par de l'α-méthylstyrène, du méthacrylate de méthyle, ou du N-phénylmaléimide ou des mélanges de ceux-ci.

5. Compositions polymères selon l'une quelconque des revendications 1 à 3 contenant de manière supplémentaire au moins une résine sélectionnée parmi le polycarbonate aromatique, le carbonate de polyester aromatique, le polyester, le polyamide ou des mélanges de ceux-ci.

6. Compositions polymères selon l'une quelconque des revendications 1 à 3, **caractérisées en ce que** l'alimentation de monomère pour la production de polymères de caoutchouc greffé est mise en oeuvre de manière à ce que 55 à 90 % en poids de la totalité des monomères utilisés lors de la polymérisation par greffage sont ajoutés de manière dosée pendant la première moitié de la totalité du temps d'ajout dosé de monomère, et la part de monomère restante est ajoutée de manière dosée pendant la deuxième moitié de la totalité du temps d'ajout dosé de monomère.

7. Compositions polymères selon l'une quelconque des revendications 1 à 3, **caractérisées en ce que** la différence de température entre le début et la fin de la réaction de greffage lors de la production des polymères de caoutchouc greffé est d'au moins 15 °C.

8. Procédé pour la préparation de compositions polymères selon l'une quelconque des revendications 1 à 3, **caractérisé en ce que** les composants I) et II) sont mélangés, puis combinés et extrudés à température accrue.

9. Utilisation des compositions polymères selon l'une quelconque des revendications 1 à 3 pour la fabrication de pièces moulées.

10. Pièces moulées que l'on peut obtenir à partir des compositions polymères selon l'une quelconque des revendications 1 à 3.

11. Polymère de caoutchouc greffé, que l'on peut obtenir grâce à une polymérisation en émulsion de styrène et d'acrylonitrile en un rapport de poids de 95:5 à 50:50, le styrène et/ou l'acrylonitrile pouvant être remplacés complètement ou partiellement par de l'α-méthylstyrène, du méthacrylate de méthyle ou du N-phénylmaléimide ou des mélanges de ceux-ci, en présence d'un mélange constitué d'un latex de polymère de butadiène (A) ayant un diamètre de particule moyen d₅₀ ≤ 250 nm et une largeur de répartition granulométrique (mesurée en tant que d₉₀-d₁₀ à partir de la répartition granulométrique intégrale) de 20 à 80 nm et une teneur en gel de 30 à 95 % en poids, d'un latex de polymère de butadiène (B) ayant un diamètre de particule moyen d₅₀ > 250 à 350 nm, une largeur de répartition granulométrique (mesurée en tant que d₉₀-d₁₀ à partir de la répartition granulométrique intégrale) de 30 à 100 nm et une teneur en gel de 30 à 80 % en poids, et d'un latex de polymère de butadiène (C) ayant un diamètre de particule moyen d₅₀ > 350 nm, une largeur de répartition granulométrique (mesurée en tant que d₉₀-d₁₀ à partir de la répartition granulométrique intégrale) de 40 à 150 nm, et une teneur en gel de 50 à 95 % en poids, les latex de polymère de butadiène contenant à l'état copolymérisé respectivement 0 à 50 % en poids d'un autre monomère de vinyle, le polymère de caoutchouc greffé étant préparé en une étape de procédé unique et présentant des teneurs en caoutchouc supérieures à 50 % en poids, et les trois latex de polymère de butadiène (A), (B) et (C) étant tous préparés par polymérisation en grains.
